(19) Europäisches Patentamt / European Patent Office / Office européen des brevets

(11) **EP 2 108 861 A1**

(12) **DEMANDE DE BREVET EUROPEEN**

(43) Date de publication:
**14.10.2009 Bulletin 2009/42**

(51) Int Cl.:
*F16H 3/02* (2006.01)

(21) Numéro de dépôt: **09157212.3**

(22) Date de dépôt: **02.04.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **09.04.2008 FR 0852379**

(71) Demandeur: **PEUGEOT CITROËN AUTOMOBILES S.A.**
**78140 Vélizy Villacoublay (FR)**

(72) Inventeur: **Le Lièvre, Armel**
**78360, MONTESSON (FR)**

(54) **Boîte de vitesses d'un véhicule automobile**

(57) La présente invention se rapporte à une boîte de vitesses d'un véhicule automobile. Dans l'invention, la boîte de vitesses comporte une pluralité de rapports de démultiplication incluant au moins deux rapports de décollage formés par :
- un premier rapport de démultiplication (C) destiné au décollage du véhicule en conditions de démarrage sévères ;
- un deuxième rapport de démultiplication (1') destiné au décollage du véhicule en conditions de démarrage normales ;

ledit premier rapport de démultiplication (C) étant défini afin de fournir, pour un régime moteur donné, une vitesse au véhicule plus faible que ledit deuxième rapport de démultiplication (1').
L'invention trouve une application immédiate dans le domaine des véhicules automobiles.

Fig.1

EP 2 108 861 A1

**Description**

La présente invention concerne une boîte de vitesses de véhicule automobile.

L'invention concerne plus particulièrement une boîte de vitesses comprenant une pluralité de rapports de démultiplication.

Une des fonctions principales d'une boîte de vitesses de véhicule automobile est d'adapter le couple transmis par le moteur du véhicule au couple résistant rencontré par le véhicule.

Cette adaptation est rendue possible en faisant appel à différents rapports de démultiplication modifiant le rapport entre la vitesse de rotation du moteur, également appelée régime moteur, et la vitesse de rotation des roues. Afin d'améliorer l'exploitation du moteur dans une multitude de cas d'utilisation possible, par exemple la circulation urbaine, la circulation sur route, en terrain plat ou en terrain accidenté, il est souhaitable de disposer de plusieurs rapports de démultiplication.

Ainsi, la majorité des boites de vitesses équipant les véhicules automobiles comporte quatre, cinq et voire six rapports de démultiplication de marche avant. Par ailleurs, ces mêmes boîtes de vitesses comportent également un rapport de démultiplication de marche arrière inversant le sens de rotation des roues.

La méthode actuelle de définition des longueurs de rapports de démultiplication d'une boîte de vitesse prend en considération diverses contraintes. Ces contraintes telles que par exemple la capacité du véhicule à démarrer en pente lorsqu'il est à sa masse maximale ou encore la vitesse de rotation du moteur souhaitée pour la vitesse maximale du véhicule en optimisant sa consommation, déterminent respectivement le dimensionnement du premier rapport et du dernier rapport de démultiplication d'une boîte de vitesses.

La plupart des trajets en véhicule automobile étant effectués avec une masse du véhicule proche de sa masse à vide, en ville et sur route plane, la contrainte de démarrage en pente engendre une conception d'un premier rapport de vitesse inutilement trop court dans la grande majorité des démarrages du véhicule, générant notamment une surconsommation inutile de carburant.

Afin de minimiser cet inconvénient, une augmentation du rapport de démultiplication de la première vitesse est réalisée afin d'obtenir un compromis entre un décollage du véhicule relativement aisé et une faible consommation de carburant du véhicule. Cependant, ce premier rapport « plus allongé » entraîne en cas de démarrage en forte pente certaines difficultés et notamment des difficultés de décollage du véhicule ainsi que des retards à l'accélération en cas de démarrage rapide et une usure prématurée de l'embrayage.

On entend par le terme décollage l'action consistant à passer d'un état d'immobilité à un état de mouvement.

Dans ce contexte, la présente invention vise à fournir une boîte de vitesses comprenant une pluralité de rapports de démultiplication qui favorise à la fois le décollage du véhicule lors d'un démarrage en forte pente occasionnelle et à la fois une faible consommation quotidienne du véhicule tout en préservant l'agrément de conduite d'une boîte de vitesses classique.

A cette fin, l'invention propose une boîte de vitesses de véhicule automobile **caractérisée en ce qu'**elle comporte une pluralité de rapports de démultiplication incluant au moins deux rapports de décollage formés par :

- un premier rapport de démultiplication destiné au décollage du véhicule en conditions de démarrage sévères ;
- un deuxième rapport de démultiplication destiné au décollage du véhicule en conditions de démarrage normales ;

ledit premier rapport de démultiplication étant défini afin de fournir au véhicule, pour un régime moteur donné, une vitesse plus faible que ledit deuxième rapport de démultiplication.

Ainsi, parmi la pluralité des rapports de démultiplication de la boîte de vitesses selon l'invention, le premier rapport de démultiplication et le deuxième rapport de démultiplication sont spécifiquement destinés au décollage du véhicule. Ce sont deux rapports que le constructeur du véhicule a spécifiquement prévu pour l'opération de décollage du véhicule. Lors d'un décollage, l'utilisateur sélectionne un des deux premiers rapports de démultiplication destiné au décollage, en fonction des conditions de roulage ; après le décollage, l'utilisateur sélectionne ensuite le rapport supérieur : le deuxième rapport de démultiplication 1' si le décollage s'effectue avec le premier rapport de démultiplication C ou le troisième rapport de démultiplication 2' si le décollage s'effectue avec le deuxième rapport de démultiplication 1', puis éventuellement les suivants.

On entend par rapport de décollage un rapport destiné à initialiser le mouvement du véhicule lorsque le véhicule est à l'arrêt.

On désigne par conditions sévères les conditions de roulage notamment lorsque le véhicule roule sur un terrain avec une forte inclinaison avec une charge proche de sa charge maximale, lorsque les démarrages sont effectués en pente ou lorsque le véhicule est chargé.

On désigne par conditions normales notamment les conditions de roulage et de démarrage lorsque le véhicule est proche de sa masse à vide et/ou lorsque le véhicule roule sur un terrain plat.

Outre les caractéristiques principales qui viennent d'être mentionnées dans le paragraphe précédent, la boîte de vitesses d'un véhicule automobile selon l'invention peut présenter une ou plusieurs caractéristiques supplémentaires ci-dessous, considérées individuellement ou selon toutes les combinaisons techniquement possibles.

Avantageusement ladite boîte de vitesses comporte six rapports de démultiplication, avec un sixième rapport de démultiplication étant défini afin de fournir une vitesse de déplacement maximale pour un régime moteur maximal ;

Selon un premier mode de réalisation, ladite boîte de vitesses est une boîte de vitesses apte à être couplée à un moteur Diesel, ladite pluralité de rapports de démultiplication étant définie de sorte que :

- ledit premier rapport de démultiplication est défini de façon à fournir une vitesse voisine de 5km/h à un régime moteur de 1000 tours/min ;
- ledit deuxième rapport de démultiplication est défini de façon à fournir une vitesse voisine de 10 km/h à un régime moteur de 1000 tours/min ;
- un troisième rapport de démultiplication est défini de façon à fournir une vitesse voisine de 19 km/h à un régime moteur de 1000 tours/min ;
- un quatrième rapport de démultiplication est défini de façon à fournir une vitesse voisine de 31 km/h à un régime moteur de 1000 tours/min ;
- un cinquième rapport de démultiplication est défini de façon à fournir une vitesse voisine de 42 km/h à un régime moteur de 1000 tours/min ;
- un sixième rapport de démultiplication est défini de façon à fournir une vitesse voisine de 54 km/h à un régime moteur de 1000 tours/min ;

Selon une deuxième mode de réalisation, ladite boîte de vitesses est une boîte de vitesses apte à être couplée à un moteur essence, ladite pluralité de rapports de démultiplication étant définie de sorte que :

- ledit premier rapport de démultiplication est défini de façon à fournir une vitesse voisine de 6km/h à un régime moteur de 1000 tours/min ;
- ledit deuxième rapport de démultiplication est défini de façon à fournir une vitesse voisine de 11 km/h à un régime moteur de 1000 tours/min ;
- un troisième rapport de démultiplication est défini de façon à fournir une vitesse voisine de 17 km/h à un régime moteur de 1000 tours/min ;
- un quatrième rapport de démultiplication est défini de façon à fournir une vitesse voisine de 23 km/h à un régime moteur de 1000 tours/min ;
- un cinquième rapport de démultiplication est défini de façon à fournir une vitesse voisine de 29 km/h à un régime moteur de 1000 tours/min ;
- un sixième rapport de démultiplication est défini de façon à fournir une vitesse voisine de 35 km/h à un régime moteur de 1000 tours/min ;

Avantageusement, ledit sixième rapport de démultiplication est défini afin d'optimiser la consommation de carburant du véhicule ;

Préférentiellement, ladite boîte de vitesses est une boîte de vitesses manuelle ;

Avantageusement, ladite boîte de vitesses est une boîte de vitesses automatique ou manuelle pilotée automatiquement ;

On entend par valeur voisine, une valeur acceptant une marge de 20%.

D'autres caractéristiques et avantages de l'invention ressortiront plus clairement de la description qui en est donnée ci-dessous, à titre indicatif et nullement limitatif, en référence aux figures annexées, parmi lesquelles :

- la figure 1 est une représentation schématique comparant la répartition des rapports de démultiplication d'une boîte de vitesses selon l'art antérieur avec la répartition des rapports de démultiplication d'une boîte de vitesses selon l'invention ;
- la figure 2 est un graphique illustrant la vitesse du véhicule en fonction du régime moteur pour un rapport de démultiplication donné.

Sur les deux figures, les éléments communs portent les mêmes numéros de référence sauf précision contraire. D'une façon générale, les rapports de démultiplication d'une boîte de vitesses classique, c'est-à-dire une boîte de vitesses connue de l'art antérieur, seront nommés « 1 », « 2 », « 3 », « 4 », « 5 », « 6 ». De la même façon, les rapports de démultiplication d'une boîte de vitesses selon l'invention seront nommés « C », « 1' », « 2' », « 3' », « 4' », « 5' ».

La boîte de vitesses selon l'invention permet de dissocier les besoins de démarrages courants, c'est-à-dire notamment sur terrains plats, des besoins de démarrages sévères, tels que les démarrages en pentes et/ou les démarrages effectués lorsque le véhicule est chargé.

La boîte de vitesses selon l'invention comporte parmi une pluralité de rapports de démultiplication, un premier rapport court C permettant de faciliter le décollage du véhicule en pente lorsque le véhicule est chargé à sa masse maximale, ou fournissant, en cas de besoins, une accélération maximale de décollage au véhicule.

Dans le but de comparer, d'adapter et de repartir correctement chaque rapport de démultiplication sur la plage d'utilisation du régime moteur, le rapport de démultiplication est défini à un régime moteur fixe de 1000 tours/min.

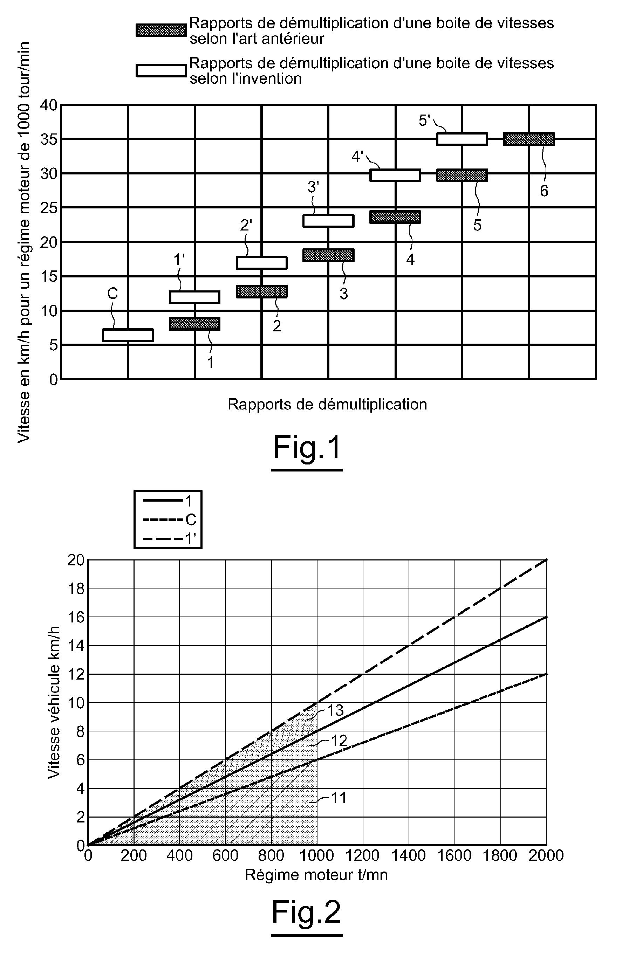

Ainsi, la figure 1 est une représentation schématique comparant la répartition des rapports de démultiplication d'une boîte de vitesses selon l'art antérieur avec la répartition des rapports de démultiplication d'une boîte de vitesses selon l'invention.

De façon générale, on parlera d'allongement d'un rapport de démultiplication lorsque le rapport de démultiplication fournit une vitesse de déplacement plus élevée pour le même régime moteur. De la même façon, on parlera de raccourcissement d'un rapport de démultiplication lorsque le rapport de démultiplication fournit une vitesse de déplacement du véhicule moins élevée pour le même régime moteur.

Dans la boîte de vitesses selon l'invention, le premier rapport court C est optimisé afin de permettre le décollage du véhicule sur une route avec une forte inclinaison à sa charge maximale et sans une usure prématurée de l'embrayage.

Ainsi, le premier rapport de démultiplication C fournit une vitesse de déplacement à 1000 tours/min inférieure à celle du premier rapport de démultiplication 1 d'une boîte de vitesses classique. De façon générale, afin de garantir un bon décollage du véhicule quelle que soit la charge du véhicule et quel que soit l'angle d'inclinaison de la pente, le premier rapport de démultiplication C est inférieur ou égal au premier rapport de démultiplication 1 d'une boîte de vitesses classique.

Le premier rapport court C n'est toutefois pas utilisé dans les conditions dites « normales » de roulage ainsi que dans les cycles d'homologation du véhicule. On entend par « conditions normales » notamment les conditions de roulage lorsque le véhicule est proche de sa masse à vide ou lorsque le véhicule roule sur un terrain plat. A l'inverse, on entend par « conditions sévères » les conditions de roulage lorsque notamment le véhicule roule sur un terrain avec une forte inclinaison et/ou avec une charge proche de sa charge maximale.

Le deuxième rapport de démultiplication 1' n'ayant plus besoin de répondre à la contrainte de décollage en pente à la masse maximale du véhicule, il peut être rallongé et optimisé afin d'assurer uniquement le décollage du véhicule lors d'une charge sensiblement proche de sa masse à vide sur terrain plat avec une faible consommation de carburant. Il est à noter que ce deuxième rapport de démultiplication 1' correspond sensiblement à un rapport intermédiaire entre le rapport 1 et le rapport 2 d'une boîte de vitesses connue.

D'une façon plus générale, la présence d'un rapport court C, destiné uniquement au décollage du véhicule en pente et/ou sous forte charge, combiné à un deuxième rapport 1' plus long apte aux décollages sur terrains plats permet de mieux étager les autres rapports de la boîte de vitesses selon l'invention, et donc d'améliorer l'agrément de conduite tout en diminuant la consommation du véhicule.

Les rapports intermédiaires 2', 3', 4' sont ensuite répartis régulièrement entre le deuxième rapport de démultiplication 1' et le dernier rapport de démultiplication 5' de façon à optimiser la puissance, le couple du moteur, et l'agrément de conduite.

En effet, le dernier rapport de démultiplication 5' est semblable au dernier rapport de démultiplication 6 d'une boîte de vitesses classique. Ce dernier rapport est optimisé afin d'obtenir une vitesse de déplacement du véhicule maximale au régime de puissance maximale du moteur.

Ainsi, la boîte de vitesses selon l'invention permet à la fois de disposer de deux rapports de démultiplication de décollage, un premier rapport C et un deuxième rapport 1' favorisant une faible consommation quotidienne de carburant tout en équilibrant la répartition des rapports de démultiplication 2', 3', 4', 5' de façon à garantir un agrément de conduite au moins équivalent à l'agrément de conduite d'une boîte de vitesse classique.

La figure 2 illustre un graphique représentant la vitesse du véhicule en fonction du régime moteur pour les trois rapports de démultiplication 1, 1', C. Très précisément, le graphique comprend une première droite représentant un rapport de décollage 1 d'une boîte de vitesses connue de l'art antérieur ainsi que deux droites représentant le premier rapport de décollage court C et le deuxième rapport de décollage 1' d'une boîte de vitesses selon l'invention.

La détermination de la longueur d'un rapport de démultiplication et notamment d'un rapport de démultiplication de décollage est réalisée en prenant essentiellement en compte les paramètres suivants :

- la masse du véhicule M,
- l'effort de résistance à l'avancement Fr du véhicule,
- l'angle d'inclinaison de la pente $\alpha$,
- l'accélération du véhicule y.

Ces paramètres permettent de calculer une force de décollage Fd, de sorte que :

$$F_d = F_r + (M.g.\sin\alpha) + (M.\gamma)$$

La force de décollage nécessaire au décollage du véhicule est fortement influencée par sa masse ainsi que par l'angle d'inclinaison ou la pente de la route.

Lors d'un décollage du véhicule au moyen d'un rapport de démultiplication de décollage C ou 1', l'embrayage dissipe une énergie E proportionnelle à la force de décollage Fd et au rapport de démultiplication du rapport du décollage. En effet, l'embrayage permet, par son glissement, d'augmenter infiniment le rapport de démultiplication lorsque le véhicule est à l'arrêt.

Cependant, le glissement de l'embrayage engendre par frottement une énergie E à dissiper. L'énergie E correspond au produit de la force de décollage Fd par le taux de glissement $\Gamma$, de sorte que $E = F_d.\Gamma$. C'est particulièrement cette énergie E à dissiper par l'embrayage qui limite techniquement l'augmentation de la longueur du rapport de décollage afin d'éviter une trop grande sollicitation de l'embrayage lors des décollages.

En effet, lors d'un décollage du véhicule sous une forte pente la force de décollage Fd augmente significativement augmentant dès lors l'énergie E à dissiper.

De plus, le taux de glissement r représenté, sur la figure 2, par la surface située sous la droite correspondant au rapport de démultiplication entre le régime moteur 0 et le régime moteur de 1000 tours/min, augmente en fonction de la longueur du rapport de décollage. Ainsi, plus le rapport de décollage est élevé, plus la surface sous la courbe augmente et plus le taux de glissement r est important.

Sur les boîtes de vitesses connues, un compromis est recherché dans le but de réduire la consommation de carburant sans trop solliciter la tenue de l'embrayage. De cette façon, le rapport de décollage 1 est défini de façon à obtenir un produit force de décollage Fd / taux de glissement r en adéquation avec le compromis recherché. Le rapport de décollage 1 est représenté par la droite 1 sur la figure 2 et le taux de glissement est représenté par la surface 11 + 12.

Pour un véhicule vide sur route plane, la force de décollage Fd est beaucoup plus faible que dans le cas d'un décollage en pente à la charge maximale du véhicule. Ainsi, pour une même énergie E à dissiper par l'embrayage, Fd étant plus faible, il est possible d'augmenter la surface représentative du taux de glissement r, correspondant à la surface 11 + 12 + 13, et donc d'augmenter le rapport de démultiplication 1' selon l'invention.

Dans le cas contraire, pour les démarrages sévères, la force de décollage Fd est importante. L'utilisation d'un rapport de démultiplication plus court C, selon l'invention, permet de réduire l'énergie E à dissiper par l'embrayage en réduisant le taux de glissement représenté par la surface 11.

Ainsi, la boîte de vitesses selon l'invention permet donc d'une part d'obtenir un premier rapport de démultiplication C court pour les décollages dans les cas d'une force de décollage Fd élevée, c'est-à-dire dans des conditions sévères avec une forte inclinaison et/ou avec une charge maximale du véhicule, et permet d'autre part de réaliser un deuxième rapport de décollage 1' plus long pour les décollages dans des conditions normales, lorsque la force de décollage Fd est faible, ce qui permet d'augmenter le taux de glissement r sans risque pour la tenue de l'embrayage.

Il a été essentiellement décrit une boîte de vitesses manuelle comportant six rapports de démultiplication ; toutefois l'invention est applicable à une boîte de vitesses comportant une pluralité de rapports de démultiplication pouvant être supérieure ou inférieure à 6 rapports.

L'invention est également applicable indifféremment à une boîte de vitesses automatique ou à une boîte de vitesses manuelle pilotée.

On désigne par boîte de vitesses automatique une boîte de vitesses capable de déterminer de façon autonome le meilleur rapport de démultiplication possible en fonction d'informations extérieures telles que le couple et le régime moteur, l'enfoncement de la pédale de l'accélérateur, la vitesse du véhicule, le couple résistant du véhicule et d'autres fonctions plus complexes.

On désigne également par boîte de vitesses manuelle pilotée une boîte de vitesses manuelle classique à laquelle on a greffé un système automatisé pilotant automatiquement le passage des rapports de démultiplication et l'embrayage de la boîte de vitesses.

Les autres avantages de l'invention sont notamment les suivants :

- gains de consommation de carburant l'ordre d'une valeur sensiblement voisine de 6%,
- amélioration de l'agrément de conduite,
- pas d'augmentation du prix de revient économique.

**Revendications**

1. Boîte de vitesses de véhicule automobile **caractérisée en ce qu'**elle comporte une pluralité de rapports de démultiplication incluant au moins deux rapports de décollage formés par :

   - un premier rapport de démultiplication (C) destiné au décollage du véhicule en conditions de démarrage sévères ;
   - un deuxième rapport de démultiplication (1') destiné au décollage du véhicule en conditions de démarrage normales ;

   ledit premier rapport de démultiplication (C) étant défini afin de fournir au véhicule, pour un régime moteur donné, une vitesse plus faible que ledit deuxième rapport de démultiplication (1'), **caractérisée en ce que** ladite boîte de vitesses comporte un nombre déterminé de rapports de démultiplication, avec un dernier rapport de démultiplication (5'), le plus élevé, qui est défini par rapport au dernier rapport de démultiplication, le plus élevé d'une boîte de vitesses « standard », c'est-à-dire une boîte de vitesses ne comportant pas deux rapports de décollage, les rapports intermédiaires étant répartis régulièrement entre le dernier rapport de démultiplication (5') et le deuxième rapport de décollage (1').

2. Véhicule automobile comportant une boîte de vitesses de véhicule automobile selon la revendication 1, **caractérisé en ce que** ladite boîte de vitesses est une boîte de vitesses apte à être couplée à un moteur Diesel, ladite pluralité de rapports de démultiplication étant définie de sorte que :

   - ledit premier rapport de démultiplication (C) est défini de façon à fournir une vitesse voisine de 5km/h à un régime moteur de 1000 tours/min ;
   - ledit deuxième rapport de démultiplication (1') est défini de façon à fournir une vitesse voisine de 10 km/h à un régime moteur de 1000 tours/min ;
   - un troisième rapport de démultiplication (2') est défini de façon à fournir une vitesse voisine de 19 km/h à un régime moteur de 1000 tours/min ;
   - un quatrième rapport de démultiplication (3') est défini de façon à fournir une vitesse voisine de 31 km/h à un régime moteur de 1000 tours/min ;
   - un cinquième rapport de démultiplication (4') est défini de façon à fournir une vitesse voisine de 42 km/h à un régime moteur de 1000 tours/min ;
- un sixième rapport de démultiplication (5') est défini de façon à fournir une vitesse voisine de 54 km/h à un régime moteur de 1000 tours/min.

3. Véhicule automobile comportant une boîte de vitesses selon la revendication 1, **caractérisé en ce que** ladite boîte de vitesses est une boîte de vitesses apte à être couplée à un moteur Essence, ladite pluralité de rapports de démultiplication étant définie de sorte que :

- ledit premier rapport de démultiplication (C) est défini de façon à fournir une vitesse voisine de 6km/h à un régime moteur de 1000 tours/min ;
- ledit deuxième rapport de démultiplication (1') est défini de façon à fournir une vitesse voisine de 11 km/h à un régime moteur de 1000 tours/min ;
- un troisième rapport de démultiplication (2') est défini de façon à fournir une vitesse voisine de 17 km/h à un régime moteur de 1000 tours/min ;
- un quatrième rapport de démultiplication (3') est défini de façon à fournir une vitesse voisine de 23 km/h à un régime moteur de 1000 tours/min ;
- un cinquième rapport de démultiplication (4') est défini de façon à fournir une vitesse voisine de 29 km/h à un régime moteur de 1000 tours/min ;
- un sixième rapport de démultiplication (5') est défini de façon à fournir une vitesse voisine de 35 km/h à un régime moteur de 1000 tours/min.

4. Véhicule automobile comportant une boîte de vitesses selon la revendication 1, **caractérisé en ce que** ledit dernier rapport de démultiplication (5') est défini afin d'optimiser la consommation de carburant du véhicule.

5. Véhicule automobile comportant une boîte de vitesses de véhicule automobile selon la revendication 1, **caractérisé en ce que** ladite boîte de vitesses est une boîte de vitesses manuelle.

6. Véhicule automobile comportant une boîte de vitesses de véhicule automobile selon la revendication 1, **caractérisé en ce que** ladite boîte de vitesses est une boîte de vitesses automatique ou manuelle pilotée automatiquement.

▮ Rapports de démultiplication d'une boite de vitesses selon l'art antérieur

▯ Rapports de démultiplication d'une boite de vitesses selon l'invention

Vitesse en km/h pour un régime moteur de 1000 tour/min

Rapports de démultiplication

## Fig.1

Vitesse véhicule km/h

Régime moteur t/mn

## Fig.2

Europäisches
Patentamt

European
Patent Office

Office européen
des brevets

**RAPPORT DE RECHERCHE EUROPEENNE**

Numéro de la demande

EP 09 15 7212

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/119829 A (BAYERISCHE MOTOREN WERKE AG [DE]; OHNEMUS ULRICH [DE]) 16 novembre 2006 (2006-11-16) * page 1 - page 3; figure 2 * ----- | 1-3,5,6 | INV. F16H3/02 |
| X | DE 44 29 546 A1 (ZAHNRADFABRIK FRIEDRICHSHAFEN [DE]) 22 février 1996 (1996-02-22) * colonne 1, ligne 35-65 * ----- | 1-5 | |
| X | WO 02/42108 A (EATON CORP [US]) 30 mai 2002 (2002-05-30) * page 8, ligne 18 - page 10, ligne 2; figure 3 * ----- | 1-4,6 | |
| X | DE 198 39 838 A1 (ZAHNRADFABRIK FRIEDRICHSHAFEN [DE]) 9 mars 2000 (2000-03-09) * colonne 1, ligne 11-38 * ----- | 1-3,5,6 | |

DOMAINES TECHNIQUES RECHERCHES (IPC)

F16H

Le présent rapport a été établi pour toutes les revendications

| Lieu de la recherche | Date d'achèvement de la recherche | Examinateur |
|---|---|---|
| Munich | 17 juillet 2009 | Daïeff, Bertrand |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 7212

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2009

| Document brevet cité au rapport de recherche | | Date de publication | Membre(s) de la famille de brevet(s) | | Date de publication |
|---|---|---|---|---|---|
| WO 2006119829 | A | 16-11-2006 | DE 102005021674 | A1 | 14-12-2006 |
| | | | EP 1880120 | A1 | 23-01-2008 |
| | | | JP 2008540946 | T | 20-11-2008 |
| | | | US 2008053258 | A1 | 06-03-2008 |
| DE 4429546 | A1 | 22-02-1996 | AUCUN | | |
| WO 0242108 | A | 30-05-2002 | AU 2392602 | A | 03-06-2002 |
| | | | BR 0115670 | A | 26-08-2003 |
| | | | CN 1474756 | A | 11-02-2004 |
| | | | DE 60118440 | T2 | 02-11-2006 |
| | | | EP 1335841 | A1 | 20-08-2003 |
| | | | HU 0302082 | A2 | 29-09-2003 |
| | | | JP 2004514106 | T | 13-05-2004 |
| | | | PL 361386 | A1 | 04-10-2004 |
| DE 19839838 | A1 | 09-03-2000 | BR 9913318 | A | 22-05-2001 |
| | | | WO 0014435 | A1 | 16-03-2000 |
| | | | EP 1108165 | A1 | 20-06-2001 |
| | | | JP 2002524707 | T | 06-08-2002 |
| | | | US 6412361 | B1 | 02-07-2002 |

EPO FORM P0460

Pour tout renseignement concernant cette annexe : voir Journal Officiel de l'Office européen des brevets, No.12/82